# DEMANDE DE BREVET EUROPEEN

(11) **EP 2 765 367 A1**
(43) Date de publication de la demande: **13.08.2014**
(21) Numéro de dépôt: 14356003.5
(22) Date de dépôt: 04.02.2014
(51) Int. Cl.: F24J 2/46

(54) **Procédé de contrôle automatique de la vidange d'une installation solaire thermique auto-vidangeable et installation équipée pour la mise en oeuvre d'un tel procédé**

(30) Priorité: 06.02.2013 FR 1300241
(71) Demandeur: Eklor, 79180 Chauray (FR)
(72) Inventeur: Savariaux, Nicolas, 79310 Verruyes (FR); Chavagnac, jean-François, 79230 Aiffres (FR); Gibert, François, 79000 Niort (FR)
(74) Mandataire: Schouller, Jean-Philippe

(57) **Abrégé**

Procédé de contrôle automatique de la vidange d'une installation solaire thermique auto-vidangeable comprenant au moins un capteur solaire (1) situé en partie haute par rapport aux autres éléments (2, 3) de l'installation et adapté pour transférer de l'énergie à un liquide caloporteur, au moins un ballon (2) de stockage d'eau, un circuit hermétique, dit circuit aller (10), de transport d'un liquide caloporteur du ballon (2) au capteur solaire (1) relié à un autre circuit hermétique, dit circuit retour (9, 14), de transport du liquide caloporteur du capteur solaire (1) vers le ballon (2), au moins un réservoir tampon (3) de stockage du liquide caloporteur situé à un niveau tel par rapport au capteur solaire (1) que l'écoulement par gravité (F2) du liquide caloporteur à partir du capteur solaire (1) vers le réservoir tampon (3) est possible, au moins une pompe (11) adaptée pour assurer la circulation du liquide du ballon (2) vers le capteur solaire (1). Le procédé comprend au moins les étapes suivantes :
-a) introduire dans l'installation, avant une première utilisation, un volume donné et fixe d'un liquide caloporteur de masse volumique et/ou de densité connue,
-b) mesurer, au moins en un point de l'installation situé en aval de la pompe (11), au moins le débit de liquide caloporteur circulant au moins dans le circuit aller, après un temps défini correspondant au temps nécessaire pour chasser l'air résiduel présent dans les circuits (9, 10, 14) en direction du réservoir tampon (3),
- c) effectuer la mesure jusqu'à la fin de la production d'énergie par le capteur solaire (1),
-d) mesurer le débit, ainsi que le temps d'écoulement, de liquide caloporteur qui s'écoule depuis le capteur solaire (1) en direction du réservoir tampon (3) lorsque la production d'énergie par le capteur solaire est arrêtée,
-e) comparer le volume de liquide écoulé hors du capteur solaire (1) avec le volume initial introduit dans l'installation, en tenant compte du volume mort de liquide présent dans le circuit,
-f) effectuer des actions correctrices si le volume de liquide écoulé hors du capteur solaire (1) est inférieur au volume initial. L'invention concerne également une installation de mise en oeuvre du procédé.

## Description

La présente invention concerne un procédé de contrôle automatique de la vidange d'une installation solaire thermique auto-vidangeable. L'invention concerne également une installation équipée pour la mise en oeuvre d'un tel procédé.

Par automatique, on désigne une collecte des données sans intervention humaine et réalisée en continu. Une installation solaire thermique, également appelée chauffe-eau solaire, est une installation dans laquelle un liquide caloporteur circule entre un ballon de stockage d'eau et des panneaux solaires dits capteurs solaires. Le liquide caloporteur récupère la chaleur résultant de l'absorption et de la transformation du rayonnement solaire par les capteurs solaires afin de la transférer à l'eau contenue dans le ballon. Une telle installation, à usage domestique, industriel ou collectif, permet de chauffer de l'eau sanitaire et/ou de produire de l'eau chaude destinée au chauffage d'un bâtiment.

Lorsque l'ensoleillement est insuffisant pour assurer le chauffage et le maintien en température de l'eau du ballon, un appoint est effectué par une autre source d'énergie, par exemple par une résistance électrique.

Un type d'installation fréquemment rencontré comporte une circulation forcée du liquide caloporteur, entre les capteurs solaires et le ballon, à l'aide d'un circulateur ou pompe. Dans de telles installations, le liquide caloporteur peut stagner dans le circuit au niveau des capteurs solaires, en cas d'arrêt de la circulation du liquide dans l'installation. Les organes de sécurité pouvant être sujet à disfonctionnement, il existe alors un risque de surchauffe du liquide et/ou de surpression dans l'installation. Dans ce cas, l'intégrité de l'installation et/ou du liquide caloporteur est affectée.

Pour remédier à cela, on connait par EP-A-2 306 116 une installation, dite auto-vidangeable ou à drainage gravitaire automatique, fonctionnant en circuit fermé, hermétique et à pression atmosphérique. Cette installation comprend, outre les éléments connus mentionnés précédemment, un réservoir tampon dont le volume est adapté pour recevoir l'air contenu dans le circuit, lors de la circulation du liquide caloporteur dans l'installation en configuration de marche. Lors de l'arrêt de la circulation, donc en absence de fonctionnement de l'installation, le liquide caloporteur s'écoule par gravité dans le réservoir tampon et est remplacé dans le circuit par l'air initialement contenu dans le réservoir. Une telle installation, en cas d'arrêt volontaire ou non, permet d'éviter la présence de liquide caloporteur dans le circuit, notamment au niveau des capteurs solaires. Le liquide est stocké, de manière automatique, dans le réservoir tampon dans lequel il s'écoule par gravité, le réservoir étant situé à une altitude inférieure à celle des capteurs solaires par rapport au ballon de stockage de l'eau. Ainsi, on évite toute surchauffe du liquide caloporteur et toute surpression du fait que le circuit est étanche et à pression atmosphérique. De plus, il n'est pas nécessaire de prévoir un organe de sécurité tel qu'un vase d'expansion sur une telle installation. On connait également par EP-A-2 388 533 une installation auto-vidangeable équipée d'un clapet anti-retour monté en dérivation sur un circuit de retour du liquide caloporteur, entre les panneaux solaires et un réservoir de vidange. Pour assurer le fonctionnement du clapet anti-retour, un moyen de génération d'une surpression au niveau du clapet anti-retour est prévu.

Néanmoins, il convient de s'assurer que la vidange du liquide caloporteur, lors de l'arrêt de l'installation, est totale et réalisée rapidement avant toute montée en température du liquide caloporteur afin d'éviter tout risque de dégradation de l'installation. En effet, il peut arriver que, compte tenu de la pente entre les capteurs solaires et le réservoir tampon et/ou de la présence de portions coudées dans le circuit, la vidange ne soit pas totale ou du moins ne soit pas totalement réalisée dans un temps prédéfini garantissant l'absence de surchauffe du liquide caloporteur, étant entendu que le liquide caloporteur peut subir d'importantes et rapides variations de température risquant d'entrainer la vaporisation du liquide en quelques minutes.

L'invention entend plus particulièrement répondre à ces inconvénients en proposant un procédé de contrôle automatique de la vidange d'une installation solaire thermique auto-vidangeable et une installation de mise en oeuvre d'un tel procédé, aisé à mettre en oeuvre et permettant d'optimiser et de gérer la vidange d'une telle installation.

A cet effet, l'invention a pour objet un procédé de contrôle automatique de la vidange d'une installation solaire thermique auto-vidangeable comprenant au moins un capteur solaire situé en partie haute par rapport aux autres éléments de l'installation et adapté pour transférer de l'énergie à un liquide caloporteur, au moins un ballon de stockage d'eau, un circuit hermétique, dit circuit aller, de transport d'un liquide caloporteur du ballon au capteur solaire relié à un autre circuit hermétique, dit circuit retour, de transport du liquide caloporteur du capteur solaire vers le ballon, au moins un réservoir tampon de stockage du liquide caloporteur situé à un niveau tel par rapport au capteur solaire que l'écoulement par gravité du liquide caloporteur à partir du capteur solaire vers le réservoir tampon est possible, au moins une pompe adaptée pour assurer la circulation du liquide du ballon vers le capteur solaire, caractérisé en ce que le procédé comprend au moins les étapes suivantes :
- a) introduire dans l'installation, avant une première utilisation, un volume donné et fixe d'un liquide caloporteur de masse volumique et/ou de densité connue,
- b) mesurer, au moins en un point de l'installation situé en aval de la pompe, au moins le débit de liquide caloporteur circulant au moins dans le circuit aller, après un temps défini correspondant au temps nécessaire pour chasser l'air résiduel présent dans les circuits en direction du réservoir tampon,
- c) effectuer la mesure jusqu'à la fin de la production d'énergie par le capteur solaire,
- d) mesurer le débit, ainsi que le temps d'écoulement, de liquide caloporteur qui s'écoule depuis le capteur solaire en direction du réservoir tampon lorsque la production d'énergie par le capteur solaire est arrêtée,
- e) comparer le volume de liquide écoulé hors du capteur solaire avec le volume initial introduit dans l'installation, en tenant compte du volume mort de liquide présent dans le circuit,
- f) effectuer des actions correctrices si le volume de liquide écoulé hors du capteur solaire est inférieur au volume initial.

Un tel procédé permet de contrôler aisément toute perte de liquide dans le circuit, que ce soit par fuite ou par stagnation, et d'effectuer rapidement les actions correctrices nécessaires, si besoin de manière automatisée.

Selon des aspects avantageux mais non obligatoires de l'invention, un tel procédé peut comprendre une ou plusieurs des étapes suivantes:
- lors de l'étape a), il est tenu compte du volume de liquide caloporteur présent dans le réservoir tampon et dans le volume mort du circuit retour.
- Lors de l'étape d), une détermination de la vitesse d'écoulement du liquide caloporteur est effectuée.
- Lors de l'étape d), une mesure du niveau de liquide caloporteur présent dans le réservoir tampon est réalisée.
- Lors de l'étape f), une alerte est transmise au personnel en charge de l'installation.

L'invention concerne également une installation solaire thermique auto-vidangeable de mise en oeuvre du procédé conforme à l'une des caractéristiques précédentes, comprenant au moins un capteur solaire situé en partie haute par rapport aux autres éléments de l'installation et adapté pour transférer de l'énergie à un liquide caloporteur, au moins un ballon de stockage d'eau, un circuit hermétique, dit circuit aller, de transport d'un liquide caloporteur du ballon au capteur solaire relié à un autre circuit hermétique, dit circuit retour, de transport du liquide caloporteur du capteur solaire vers le ballon, au moins un réservoir tampon de stockage du liquide caloporteur situé à un niveau tel par rapport au capteur solaire que l'écoulement par gravité du liquide caloporteur à partir du capteur solaire vers le réservoir tampon est possible, au moins une pompe adaptée pour assurer la circulation du liquide du ballon vers le capteur solaire, caractérisée en ce qu'elle comprend au moins un capteur de débit, adapté pour mesurer le débit de liquide caloporteur circulant dans les deux sens, dans les circuits aller et retour entre le capteur solaire et le ballon, placé sur l'installation en aval de la sortie du ballon lui-même placé en aval de la pompe et relié à un boitier de régulation, équipé d'un moyen de comptage du temps et adapté pour assurer la collecte, le traitement et la transmission des données et générer au moins une action correctrice.

L'invention sera mieux comprise et d'autres avantages de celle-ci apparaitront plus clairement à la lecture de la description qui va suivre de plusieurs modes de réalisation de l'invention, donnée à titre d'exemple et faite en référence aux dessins suivants dans lesquels:
- La figure 1 est un diagramme simplifié illustrant une installation solaire thermique adaptée pour la mise en oeuvre d'un procédé conforme à un mode réalisation de l'invention, l'installation étant en configuration de marche, le liquide caloporteur circulant dans l'installation et
- la figure 2 est un diagramme similaire à celui de la figure 1, lorsque, le liquide caloporteur étant stocké dans un réservoir tampon, l'installation est en configuration de d'arrêt.

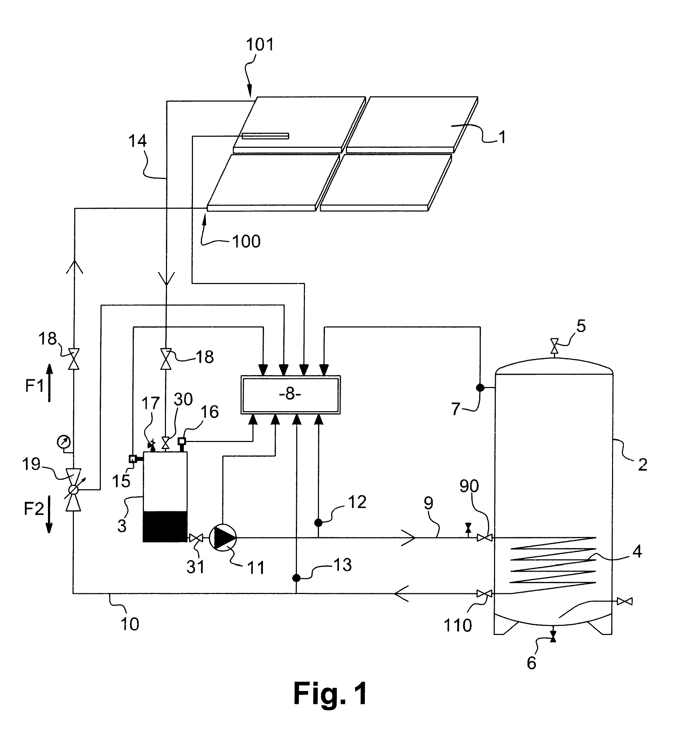

La figure 1 illustre une installation conforme à un mode de mise en oeuvre du procédé, représentée en configuration de marche, c'est-à-dire avec une circulation de liquide caloporteur dans l'installation. Cette dernière comprend, en partie haute en regardant la figure 1, quatre panneaux ou capteurs solaires 1 connus en soi. En variante le nombre de capteurs solaires est supérieur ou inférieur à quatre. Ces capteurs 1 sont creux et pourvus de tubulures internes assurant la circulation d'un liquide caloporteur. Les capteurs 1 sont reliés à, d'une part, un ballon de stockage 2, contenant de l'eau destinée à fournir en eau chaude le bâtiment, que ce soit pour un usage sanitaire ou pour le chauffage et, d'autre part, à un réservoir tampon 3 destiné à recevoir un liquide caloporteur connu en soi, par exemple de l'eau additionnée d'un antigel tel du glycol. Une entrée 100 de liquide caloporteur provenant du ballon 2 est située en partie basse des capteurs solaires 1 en regardant la figure 1. L'entrée 100 forme l'extrémité avale du circuit aller, le liquide caloporteur à chauffer entrant dans les capteurs solaires 1 par l'entrée 100. Une sortie 101, située en partie haute des capteurs solaires 1 en regardant la figure 1, permet le retour du liquide caloporteur en direction du ballon 2. La sortie 101 forme ainsi l'extrémité amont du circuit retour.

Le ballon 2 est, dans l'exemple, de forme cylindrique à base circulaire. Il a un volume généralement compris entre 100 l et 10 000 l afin d'assurer un apport en eau chaude suffisant pour satisfaire aux besoins des occupants du bâtiment et/ou au chauffage de ce dernier. Le ballon 2 est équipé d'un échangeur thermique 4, connu en soi, permettant de transférer des calories thermiques du liquide caloporteur provenant des capteurs solaires 1 à l'eau présente dans le ballon 2. L'échangeur thermique 4 est ici intégré au ballon 2. En variante, il est situé à l'extérieur du ballon 2.

Outre une vanne de surpression 5 montée en partie supérieure du ballon 2, ce dernier est pourvu d'une vanne de soutirage 6 en partie inférieure. Une sonde de température 7 équipe le ballon 2 et est reliée à un boitier de régulation 8. Par convention, le circuit est dit aller de la sortie du ballon 2 jusqu'à l'entrée 100 des capteurs solaires 1. Des conduites 9, 10 respectivement entrant et sortant du ballon 2 assurent la circulation du liquide caloporteur dans l'échangeur thermique 4. Les extrémités 90 et 110 respectivement des conduites 9, 10 forment les extrémités avale du circuit retour et amont du circuit aller du liquide caloporteur. La conduite 10 assure le transport du liquide caloporteur entre le ballon 2 et les capteurs solaires 1.

La conduite 9 relie le réservoir tampon 3 au ballon 2. Une pompe ou circulateur 11, connue en soi, est placée en sortie basse du réservoir 3, en regardant la figure 1, sur la conduite 9. Elle assure une circulation forcée du liquide caloporteur entre le réservoir 3 et le ballon 2. Des sondes thermiques 12, 13 sont respectivement placées sur les conduites 9 et 10 et reliées au boitier 8. La pompe 11 est également connectée au boitier de régulation 8.

Une conduite 14 relie le capteur 1 à la partie haute du réservoir tampon 3, en regardant la figure 1. La conduite 14 participe au circuit retour du liquide caloporteur depuis les capteurs solaires 1 jusqu'au ballon 2. La conduite 14 permet que le liquide caloporteur s'écoule, en premier, à partir de la sortie 101 des capteurs solaires 1 dans le réservoir 3 placé, par rapport au ballon 2, à une altitude inférieure à l'altitude des capteurs solaires 1. La différence d'altitude entre le réservoir 3 et les capteurs solaires 1 ainsi que la distance et la position respectives entre ces éléments définissent une pente entre les capteurs solaires 1 et le réservoir 3 adaptée pour assurer un drainage gravitaire du liquide caloporteur en absence de circulation forcée du liquide dans l'installation.

Le réservoir 3 a un volume utile adapté pour recevoir l'air contenu dans les capteurs solaires et dans une partie du circuit retour située entre le réservoir 3 et la sortie 101 lorsque le liquide caloporteur ne circule pas dans l'installation et est stocké dans le réservoir 3, étant entendu que le réservoir 3 est maintenu, comme le reste de l'installation, à pression atmosphérique.

Le réservoir 3 est pourvu de sondes ou capteurs 15, 16 par exemple un capteur de caractéristiques physique et/ou chimique telles que la température ou le pH. Ces sondes 15, 16 sont reliées au boitier de régulation 8. Une vanne ou purge de surpression 17 équipe le réservoir 3.

Les conduites 9, 10 et 14 sont avantageusement pourvues, chacune, d'au moins une vanne d'isolement 18, permettant, si besoin, d'isoler certaines portions des circuits aller et retour.

Un débitmètre 19 est relié au boitier de régulation 8 et montée sur la conduite 10. Le débitmètre 19 est avantageusement électronique. Il est monté sur le circuit aller, en aval de la sortie 110 du ballon 2, lui-même placé en aval de la pompe 11 selon le sens de circulation du liquide caloporteur en configuration de marche de l'installation. Outre un réglage du débit de liquide caloporteur, le débitmètre 19 permet de mesurer un débit de liquide caloporteur circulant dans l'un ou l'autre sens dans le circuit.

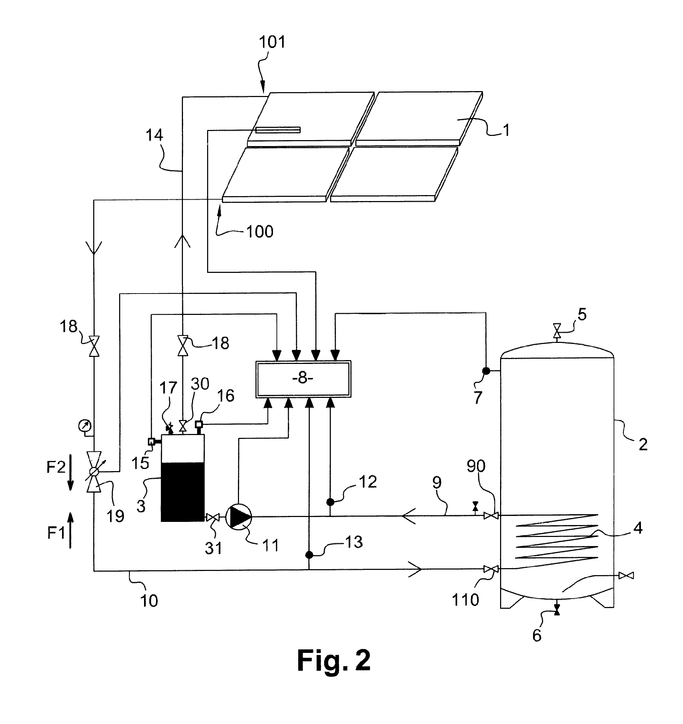

Le fonctionnement de l'installation est maintenant décrit en référence aux figures 1 et 2.

Lorsque l'installation est en marche, c'est-à-dire lorsque le capteur solaire produit de l'énergie, le liquide caloporteur prend des calories au niveau des capteurs solaires et les restitue à l'eau contenue dans le ballon 2, le trajet du liquide caloporteur est le suivant.

La circulation du liquide caloporteur commence par une phase dite de démarrage dont la durée, prédéfinie, correspond à l'évacuation de l'air présent dans les circuits de l'installation en direction du réservoir 3. Lors de cette phase, l'air de l'installation remplace le liquide caloporteur initialement présent dans le réservoir, maintenant ainsi constante la pression initiale de l'installation.

En sortie 110 du ballon 2, le liquide caloporteur passe dans le circuit aller, à savoir dans la conduite 10 et par le débitmètre 19, selon la flèche F1. Il entre dans les capteurs solaires par l'entrée basse 100. Il ressort par la sortie haute 101, chauffée, et s'écoule, par la conduite 14, dans le réservoir 3. Il entre dans le réservoir 3 par une vanne 30 située en partie haute et ressort par une vanne 31 située en partie basse du réservoir 3. Cette vanne 31 relie le réservoir à la conduite 9 sur laquelle est placée la pompe 11. Dans l'exemple, la pompe 11 est montée en sortie de la vanne 31. Dans d'autres modes de réalisation non illustrés, la pompe 11 est placée ailleurs sur la conduite 9 ou sur la conduite 10.

Le liquide caloporteur entre ensuite par l'entrée 90 dans le ballon 2, circule dans l'échangeur thermique 4, cède les calories collectées à l'eau contenue dans le ballon 2 avant de ressortir par la sortie 110 et de repartir en direction des capteurs solaires 1 comme indiqué précédemment.

Du fait des positions respectives des différents organes constitutifs de l'installation et des positions des entrée 100 et sortie 101 la circulation du liquide caloporteur ne peut se faire que de manière forcée, à l'encontre de la gravité, par l'action de la pompe 11. Dans ce cas, le volume de liquide caloporteur présent dans le réservoir 3 est sensiblement constant et compris entre 25% et 35% du volume utile du réservoir 3.

La figure 2 illustre une installation à l'arrêt, c'est-à-dire lorsque le liquide caloporteur ne circule pas, la pompe 11 étant, par exemple, arrêtée. Une telle situation se produit soit lorsque le rayonnement solaire est insuffisant pour chauffer le liquide caloporteur, soit lorsque la température maximale admissible de l'eau contenue dans le ballon 2 est atteinte, soit lorsque les capteurs solaires 1 ne sont plus en mesure de transférer suffisamment d'énergie au liquide caloporteur, soit en cas d'avaries dans l'installation, telles qu'une panne de la pompe 11, une fuite, une vanne défectueuse ou autre.

Dans cette configuration, et compte tenu de la position des différents organes, le liquide n'est plus introduit dans les capteurs solaires 1 par l'entrée 100 sous l'effet du pompage. La pression régnant dans l'ensemble de l'installation étant la pression atmosphérique, l'air contenu dans le volume libre du réservoir 3 pénètre par la sortie 101 et remplace le liquide caloporteur présent dans les capteurs solaires 1, au fur et à mesure que le liquide caloporteur s'écoule dans le conduit 10 en sortant par l'entrée 100.

L'air contenu dans les capteurs solaires 1 dans la partie haute de l'installation, c'est-à-dire celle située au-dessus du réservoir 3 se comporte comme un vase d'expansion. La dilatation de l'air étant faible, cela n'entraine aucune surpression dans l'installation. La pression dans l'installation reste constante.

Le liquide s'écoule par le débitmètre 19, selon la flèche F2. Le liquide caloporteur est ainsi repoussé dans le conduit 10 et l'échangeur 4 jusque dans le réservoir, en passant librement par la pompe 11. Dans ce cas, il occupe le volume libéré par l'air maintenant présent dans les capteurs solaires 1 et dans les volumes morts des conduites, essentiellement les conduites 14 et 10. Comme illustré à la figure 2, le liquide caloporteur occupe alors un volume compris entre 60% et 100% du volume utile du réservoir 3.

Il est à noter que certaines portions de l'installation sont utilisées autant pour le circuit aller que pour le circuit retour, leur appartenance à l'un ou l'autre des circuits étant déterminée selon le sens de l'écoulement du liquide caloporteur dans la conduite.

Le fait que le débitmètre 19 soit pourvu d'un capteur de débit fonctionnant dans les deux sens, c'est-à-dire adapté pour mesurer un débit du liquide s'écoulant selon l'une ou l'autre des flèches F1 et F2, permet d'effectuer au moins une mesure du débit dynamique du liquide caloporteur dans le circuit.

Le débitmètre 19 permet, par au moins la seule mesure d'un débit dynamique, de vérifier que du liquide caloporteur est présent dans l'installation, cela quel que soit le sens de circulation, c'est-à-dire à tout moment, que l'installation fonctionne ou non. En d'autres termes, on contrôle ainsi, en permanence, une anomalie dans la circulation de liquide caloporteur, que ce soit par exemple un arrêt de la pompe 11 ou une fuite.

Le boitier 8 auquel le débitmètre 19 est relié, est adapté pour, en cas d'absence de circulation de liquide, générer une alerte et/ou une action auprès du personnel en charge de l'installation. L'action est, au moins, un arrêt de la pompe s'il s'avère que celle-ci est toujours en marche.

En d'autres termes, la mesure du débit dynamique fournit, à tout instant, une information de type binaire, présence ou absence de liquide caloporteur dans l'installation. Cette information est traitée immédiatement pour une action rapide visant à préserver la sécurité et l'intégrité de l'installation.

En plaçant un tel débitmètre 19 sur l'installation en aval de la pompe, du fait qu'il peut fonctionner dans les deux sens et si ce débitmètre 19 est relié au boitier de régulation 8, du fait que ce dernier est équipé d'un moyen de comptage du temps, il est alors possible de calculer le temps de l'écoulement et la vitesse de passage du liquide caloporteur dans le débitmètre 19 ainsi que le volume de liquide caloporteur passant par le débitmètre 19 lors du retour depuis les capteurs solaires jusqu'au réservoir 3.

A partir des données initiales, à savoir le volume et/ou le poids, concernant la quantité de liquide caloporteur initialement introduite dans l'installation et en contrôlant le niveau de liquide dans le réservoir 3 à l'aide du capteur de niveau 15, il est possible, par des moyens de calcul connus en soi et avantageusement intégrés au boitier 8, de vérifier si la totalité du liquide caloporteur s'est écoulée des capteurs solaires 1, étant entendu qu'un volume mort de liquide est présent dans le circuit et qu'une correction tenant compte de ce volume mort est faite. Il est également possible d'apprécier le temps nécessaire à l'évacuation du liquide hors des capteurs solaires 1, à partir de la vitesse de passage du liquide caloporteur dans le débitmètre 19. Ces paramètres, par comparaison avec des valeurs prédéfinies, si besoin complétées par des mesures d'autres paramètres tels que la température et/ou la teneur en oxygène, permettent de savoir si l'écoulement est effectué à une vitesse suffisante pour éviter toute surchauffe du liquide.

Lorsqu'une anomalie ressort des mesures et des calculs effectués par le boitier 8, celui-ci génère une action correctrice, par exemple l'arrêt de l'installation, tout en effectuant, avantageusement et de manière simultanée, une alerte auprès du personnel responsable de l'installation. Cette alerte, sonore et/ou visuelle, ainsi que les actions correctrices sont, de manière préférée, réalisées de manière automatique, à l'aide de moyens filaires ou non, connus en soi.

Un tel procédé et une telle installation de mise en oeuvre du procédé permettent d'optimiser la gestion d'une installation solaire thermique en améliorant la sécurité et la gestion du liquide caloporteur, cela en minimisant l'intervention humaine du fait que non seulement la collecte des paramètres mais également les actions correctrices sont automatisées.

Le nombre de moyens de mesure du débit ainsi que leurs emplacements sont adaptés à la redondance et/ou types de mesures souhaités.

Dans d'autres modes de réalisation non illustrés, le nombre de réservoirs 3 et/ou de ballons 2 et/ou de pompes 11 est différent.

Les différents organes constitutifs de l'installation peuvent être installés hors sol ou enterrés, sauf les capteurs solaires 1. De même il est possible de disposer plusieurs installations en parallèle, gérées par un seul boitier de régulation 8.

Le procédé peut être mis en oeuvre sur une installation déjà existante, en seconde monte, pour autant que les différents constituants de l'installation soient compatibles avec les moyens à mettre en oeuvre.

## Revendications

1. Procédé de contrôle automatique de la vidange d'une installation solaire thermique auto-vidangeable comprenant au moins un capteur solaire (1) situé en partie haute par rapport aux autres éléments (2, 3) de l'installation et adapté pour transférer de l'énergie à un liquide caloporteur, au moins un ballon (2) de stockage d'eau, un circuit hermétique, dit circuit aller (10), de transport d'un liquide caloporteur du ballon (2) au capteur solaire (1) relié à un autre circuit hermétique, dit circuit retour (9, 14), de transport du liquide caloporteur du capteur solaire (1) vers le ballon (2), au moins un réservoir tampon (3) de stockage du liquide caloporteur situé à un niveau tel par rapport au capteur solaire (1) que l'écoulement par gravité (F2) du liquide caloporteur à partir du capteur solaire (1) vers le réservoir tampon (3) est possible, au moins une pompe (11) adaptée pour assurer la circulation du liquide du ballon (2) vers le capteur solaire (1), **caractérisé en ce que** le procédé comprend au moins les étapes suivantes :
- a) introduire dans l'installation, avant une première utilisation, un volume donné et fixe d'un liquide caloporteur de masse volumique et/ou de densité connue,
- b) mesurer, au moins en un point de l'installation situé en aval de la pompe (11), au moins le débit de liquide caloporteur circulant au moins dans le circuit aller, après un temps défini correspondant au temps nécessaire pour chasser l'air résiduel présent dans les circuits (9, 10, 14) en direction du réservoir tampon (3),
- c) effectuer la mesure jusqu'à la fin de la production d'énergie par le capteur solaire (1),
- d) mesurer le débit, ainsi que le temps d'écoulement, de liquide caloporteur qui s'écoule depuis le capteur solaire (1) en direction du réservoir tampon (3) lorsque la production d'énergie par le capteur solaire est arrêtée,
- e) comparer le volume de liquide écoulé hors du capteur solaire (1) avec le volume initial introduit dans l'installation, en tenant compte du volume mort de liquide présent dans le circuit,
- f) effectuer des actions correctrices si le volume de liquide écoulé hors du capteur solaire (1) est inférieur au volume initial.
- 2. Procédé selon la revendication 1, **caractérisé en ce que** lors de l'étape a), il est tenu compte du volume de liquide caloporteur présent dans le réservoir tampon (3) et dans le volume mort du circuit retour (10).
- 3. Procédé selon la revendication 1, **caractérisé en ce que** lors de l'étape d), une détermination de la vitesse d'écoulement du liquide caloporteur est effectuée.
- 4. Procédé selon l'une des revendications précédentes, **caractérisé en ce que** lors de l'étape d), une mesure du niveau de liquide caloporteur présent dans le réservoir tampon (3) est réalisée.
- 5. Procédé selon l'une des revendications précédentes, **caractérisé en ce que** lors de l'étape f), une alerte est transmise au personnel en charge de l'installation.
- 6. Installation solaire thermique auto-vidangeable de mise en oeuvre du procédé conforme à l'une des revendications précédentes, comprenant au moins un capteur solaire (1) situé en partie haute par rapport aux autres éléments (2, 3) de l'installation et adapté pour transférer de l'énergie à un liquide caloporteur, au moins un ballon (2) de stockage d'eau, un circuit hermétique, dit circuit aller (10), de transport d'un liquide caloporteur du ballon (2) au capteur solaire (1) relié à un autre circuit hermétique, dit circuit retour (9, 14), de transport du liquide caloporteur du capteur solaire (1) vers le ballon (2), au moins un réservoir tampon (3) de stockage du liquide caloporteur situé à un niveau tel par rapport au capteur solaire (1) que l'écoulement par gravité (F2) du liquide caloporteur à partir du capteur solaire (1) vers le réservoir tampon (3) est possible, au moins une pompe (11) adaptée pour assurer la circulation du liquide du ballon (2) vers le capteur solaire (1), **caractérisée en ce qu'**elle comprend au moins un capteur de débit (19), adapté pour mesurer le débit de liquide caloporteur circulant dans les deux sens, dans les circuits aller et retour entre le capteur solaire (1) et le ballon (2), placé sur l'installation en aval de la sortie du ballon (2) lui-même placé en aval de la pompe (11) et relié à un boitier de régulation (8), équipé d'un moyen de comptage du temps et adapté pour assurer la collecte, le traitement et la transmission des données et générer au moins une action correctrice.
